# EUROPEAN PATENT SPECIFICATION

(11) **EP 2 044 507 B1**
(45) Date of publication and mention of the grant of the patent: **05.06.2013**
(21) Application number: 07799462.2
(22) Date of filing: 10.07.2007
(51) Int. Cl.: H04M 1/02, G06F 3/147

(54) **CONFIGURABLE MODULAR MULTI-FUNCTION COMMUNICATION DEVICE**
KONFIGURIERBARES MODULARES MULTIFUNKTIONS-KOMMUNIKATIONSGERÄT
DISPOSITIF DE COMMUNICATION MULTIFONCTION MODULAIRE CONFIGURABLE

(30) Priority: 10.07.2006 US 830072 P
(43) Date of publication of application: 08.04.2009
(73) Proprietor: Aria Enterprises, Inc., Beaverton, Oregon 97007-9237 (US)
(72) Inventor: VOSSOUGHI, Sohrab, Portland, Oregon 97229 (US); KNAUB, David Randall, Portland, Oregon 97239 (US); SAYLER, Dave, Portland, Oregon 97231 (US); BALLERSTEDT, Felix, Portland, Oregon 97215 (US); CRISP, Thomas, Portland, Oregon 97225 (US)
(74) Representative: Moore, Barry
(86) International application number: PCT/US2007/073178
(87) International publication number: WO 2008/008791

(56) References cited:
- EP-A1- 1 489 821
- EP-A2- 0 829 992
- JP-A- 2001 309 027
- US-A1- 2003 068 034
- US-A1- 2004 224 638
- US-A1- 2005 116 334
- US-B2- 6 742 685

## Description

### Technical Field

The present disclosure relates to mobile communication devices and, in particular, to a modular, configurable, multi-function mobile communication device that can be fully customized to users' personal tastes and desired modes of use.

### Background Information

The increasing worldwide popularity of mobile or cellular telephones has transformed the way people live and work, while reshaping the cultural landscape. The proliferation of thousands of models and styles of mobile telephones has turned this one-time marvel of technology into a commodity product. Over 500 million sleek, colorful new mobile telephone sets are sold annually and used to send text and e-mail messages, browse the World Wide Web, play video games, keep track of personal information, take photographs, and store and play music in many different situations, modes, and capacities. The mobile telephone has rapidly become the centerpoint of digital life, as well as a personal fashion statement.

EP 1489821 describes a modular wireless telephone including a base module having a connection area on a face of the base module, the connection area configured to electrically connect and mount an input device module and a display device module. The input device and display device modules are removably mounted on the connection area so that they can be replaced by a user of the wireless telephone.

JP 2001309027 addresses the problem of providing a mobile communication terminal whose respective components including a display, can easily be exchanged by a user on the like so as to be provided with various functions and designs, and in which the communication method between a module and a main body is established so as to eliminate the trouble for worrying about wirings and the like. The solution detailed is one where by the display is at least one component in the display and a key operation part is constituted as an independent LCD module so that it can be incorporated with and removed from the terminal main body of the mobile communication terminal including the key operation part. The terminal main body and the LCD module are provided with infrared ray emitting units and and infrared ray receiving units and as local communication means for communicating information by using an infrared ray being one side in the infrared ray and radio.

US 2003068034 describes a cellular telephone that may be equipped with a compartment that slidingly receives upgrade modules, such as PC or memory cards. The modules may provide added functionality, such as wireless Ethernet connection, additional memory, pre-programmed memory, additional processing, better displays, and the like. By simply unplugging an existing card from its compartment and inserting in its place a new card, upgraded features may be pluggingly provided to cellular telephones.

### Summary of the Disclosure

Preferred embodiments of a mobile communication device combine the latest in communication technology with established patterns of human behavior. Several of the preferred embodiments of the communication device specifically described are those of a mobile telephone. By framing the opportunity within the context of a market that had become greatly commodified and was rapidly fragmenting, applicant identified an opportunity to move away from developing yet another multi-function mobile telephone. The design of the modular multi-function mobile telephone embodies definitions of several user profiles, along with potential use scenarios that range from individuals wanting to stay in touch at all times in a familiar way, to business professionals seeking to easily connect to the Internet and send and receive e-mail messages, and to teenagers wanting to customize in an instant their telephones to a desired look.

Applicants' conceptual exploration of technology, communication, and human behavior revealed certain interesting findings. Although mobile telephones are becoming increasingly smaller, human fingers are not. As a matter of simple practicality, the keypad has remained the largest component of these devices. The keypad is also the most configurable and least expensive component of the mobile telephone. Preferred embodiments separate the keypad from the rest of the mobile telephone components and provide a flexible, functional, and configurable modular communication device called "POD" that can fully and affordably address a user's desire for greater customization.

POD is composed of an information delivery module, called "puck" because of the physical appearance of its preferred embodiments, and an information input module, such as a keypad. The information delivery and information input modules are matable to each other. The puck is a single base unit that can work with a touchscreen keypad or a number of modular keypad or other information input attachments. With the puck, POD addresses different use modes and aesthetic sensibilities of its users. This enables the user to change the look of the product according to personal taste and enhances the functionality of the device to fit the exact occasion and mode of use. The puck preferably contains communication and display signal processing circuitry and associated components of the POD, including a display screen, energy supply (battery), and video camera. Communication signal connectors or other devices are placed on the outside ring or rear surface of the puck. The puck acts on its own as the navigation key and provides on its screen menu (including an on-screen touch sensing keypad) user access to all functionality including telephone, PDA (personal digital assistant), camera, clock, and MP3 music player. Navigation key actuators include mechanical keys or, more preferably, touchscreen function actuation areas. User-controlled navigation takes place on or in the vicinity of the display screen, whether by hard or soft key actuation.

Functionality can be expanded by use of a keypad module that enables the POD to be used as a conventional mobile telephone, PDA, MP3 player, and gaming device. Using common flex-circuit technology, interchangeable keypads can be encased and manufactured inexpensively in many different shapes, finishes, and materials such as leather, fabrics, silicon rubbers, plastics, and metals. In certain embodiments, use in the puck of an on-screen touch sensing keypad enhances POD design flexibility by enabling use of fewer (by elimination of the keypad module) or different functional controls in the information input module. Moreover, accent covers fitted over the back surface of the POD provide another opportunity to readily customize its appearance.

The modular design approach implements a compact, affordable, customizable, and highly functional solution that transcends use and user differences while creating an iconic device. Accordingly there is provided a communications device as detailed in claim 1. Advantageous features are provided in the claims dependent thereto. An information delivery module according to claim 12 is also provided. Advantageous features are provided in the dependent claims thereto.

Additional aspects and advantages will be apparent from the following detailed description of preferred embodiments, which proceeds with reference to the accompanying drawings.

### Brief Description of the Drawings

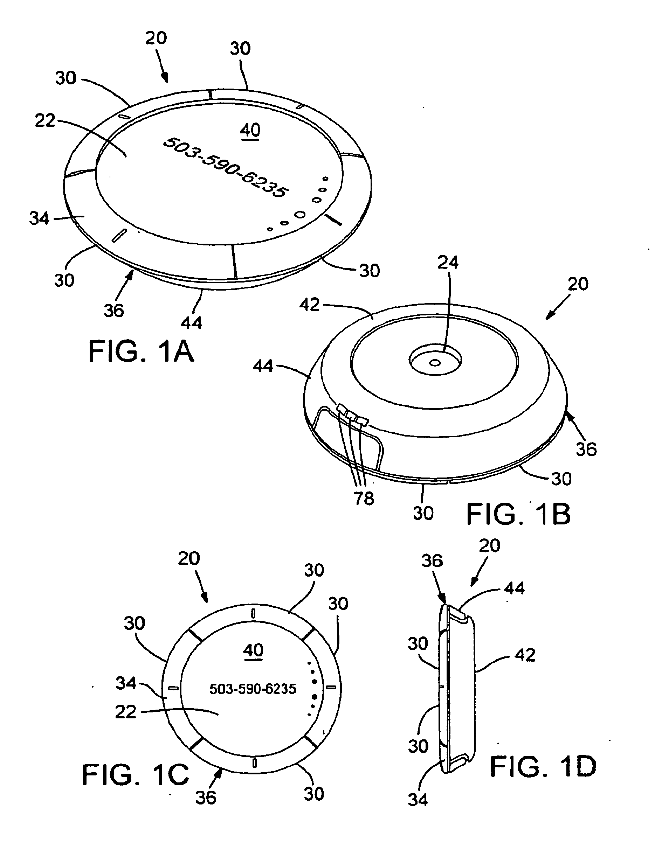

Figs. 1 A, 1B, 1C, and 1D are, respectively, front perspective, rear perspective, front elevation, and side elevation views of a preferred information delivery module (or "puck") configured to fit into a depthwise tapered opening in, and achieve matable connection with, any one of a number of information input modules to create a variety of embodiments of a modular multi-function communication device.

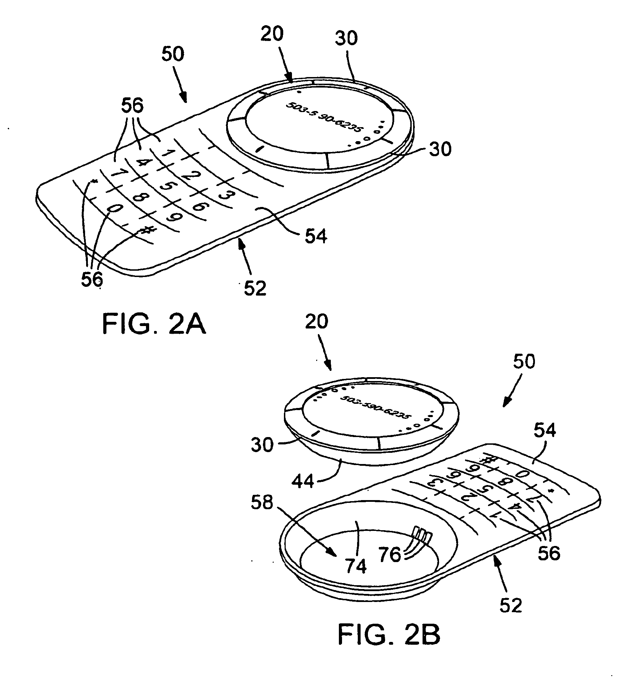

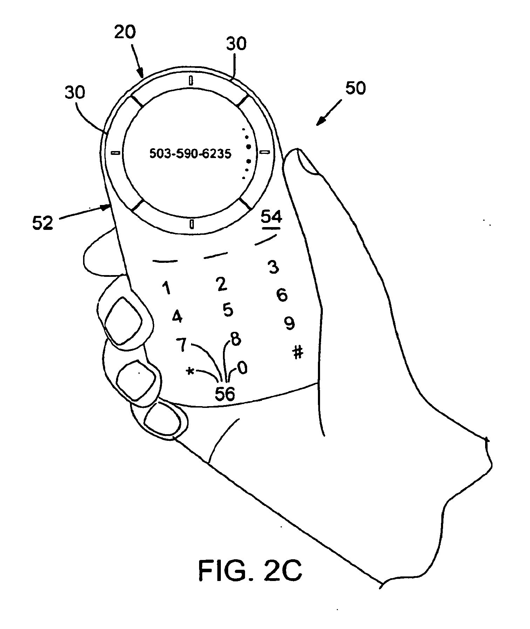

Figs. 2A, 2B, and 2C are perspective views of a modular multi-function communication device shown, respectively, completely assembled, partly exploded to illustrate a telephone input module embodied as a conventional mobile telephone form factor keypad having a circular, depthwise tapered opening sized to receive the information display module of Figs. 1A-1D; and held in the palm of a user's right hand.

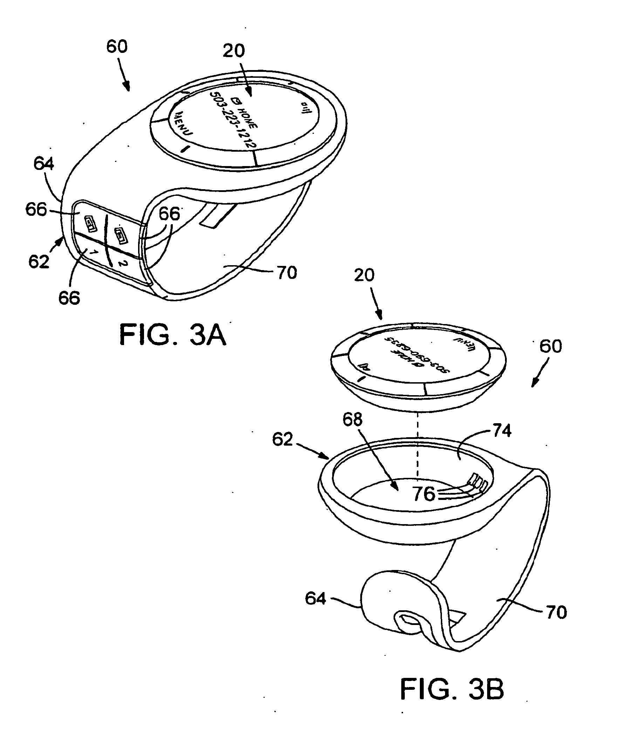

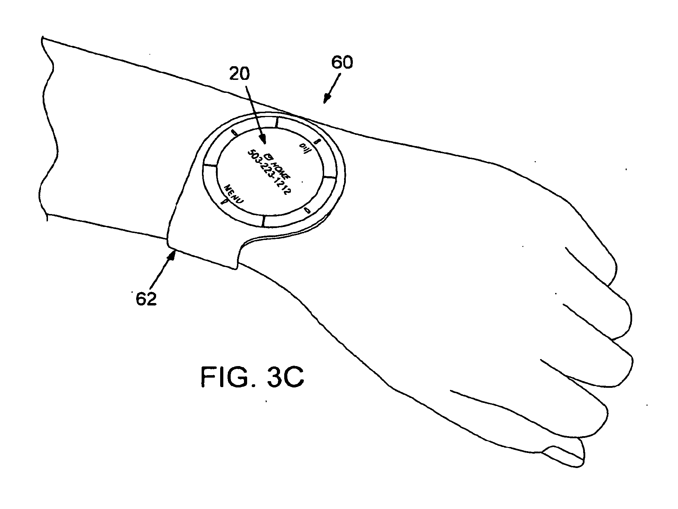

Figs. 3A, 3B, and 3C are perspective views of a modular multi-function communication device shown, respectively, completely assembled; partly exploded to illustrate a telephone input module embodied as a wrist watch keypad having a circular, depthwise tapered opening sized to receive the information display module of Figs. 1 A-1 D; and worn on a user's left wrist.

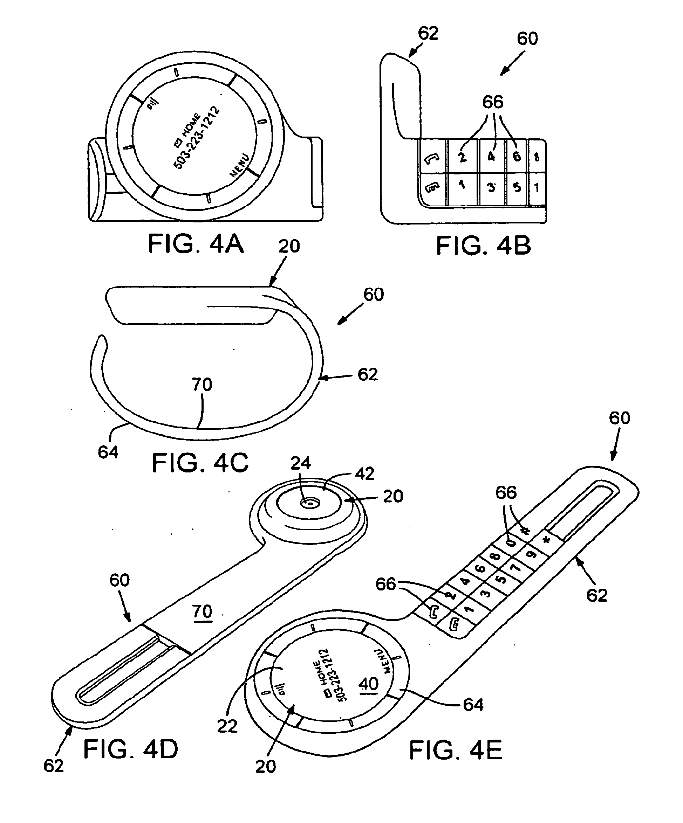

Figs. 4A, 4B, and 4C are respective top plan, side surface elevation, and side profile elevation views of the wrist watch of Figs. 3A-3C in a folded state; and Figs. 4D and 4E are respective inside and outside surface perspective views of the wrist watch of Figs. 3A-3C in an unfolded state.

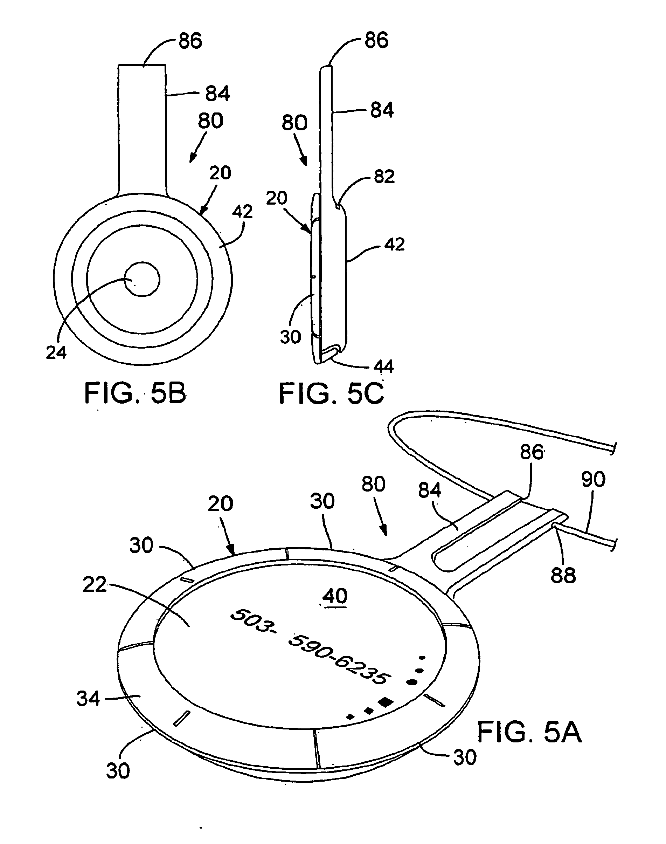

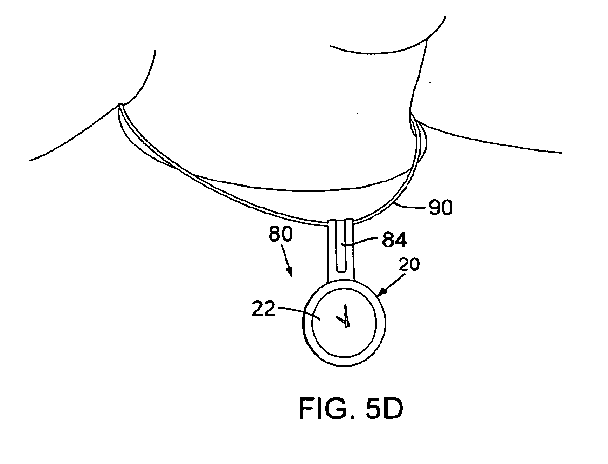

Figs. 5A, 5B, and 5C are, respectively, perspective, front elevation, and side elevation views of an information delivery module of a modular multi-function communication device, which module is embodied as a necklace pendant; and Fig. 5D is a frontal view of a user wearing the necklace pendant around her neck.

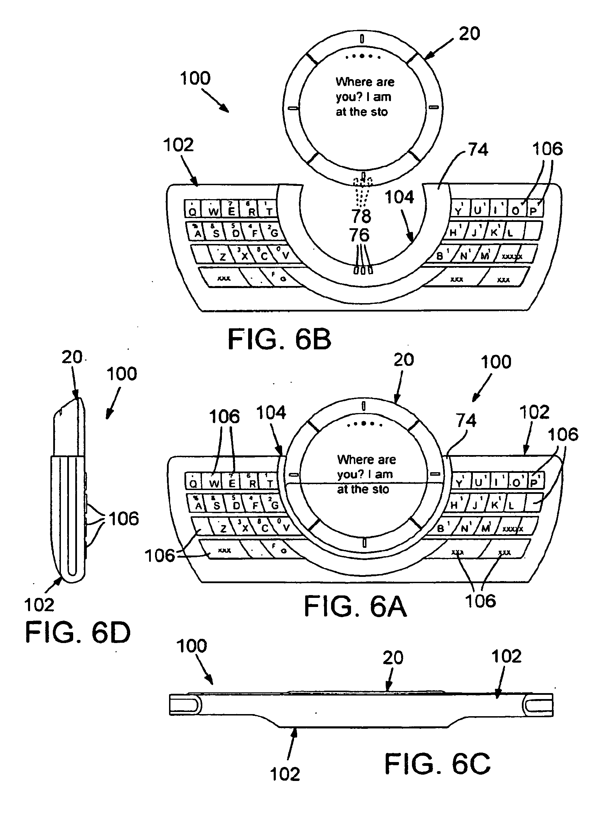

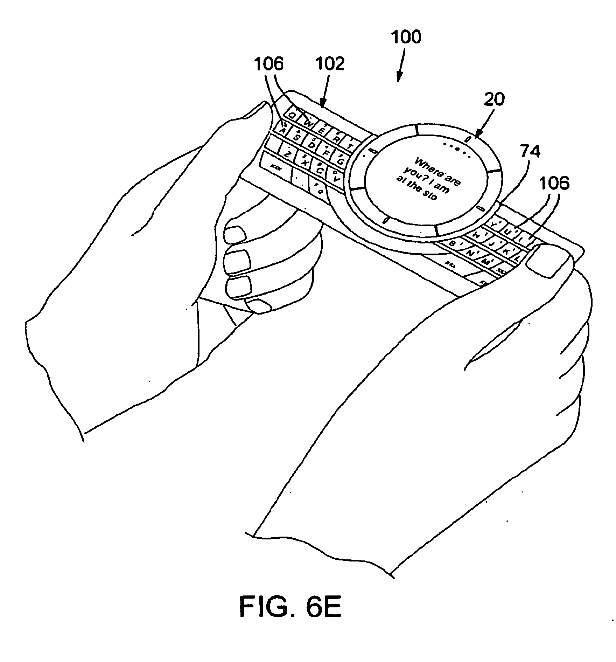

Figs. 6A and 6B are top plan views of a modular multi-function communication device shown, respectively, completely assembled and partly exploded to illustrate a personal digital assistant (PDA) or text messaging input module embodied as a keypad configured for two-hand operation and having an arcuate, depthwise tapered opening sized to receive the information display module of Figs. 1A-1D; Figs. 6C and 6D are respective front side elevation and left-hand side elevation views of the modular multi-function communication device of Fig. 6A; and Fig. 6E is a perspective view of the modular multi-function communication device of Fig. 6A shown with the keyboard held by a user for two-hand operation.

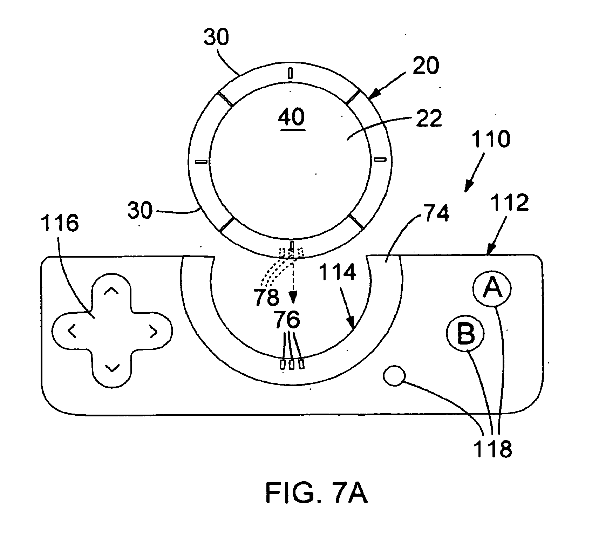

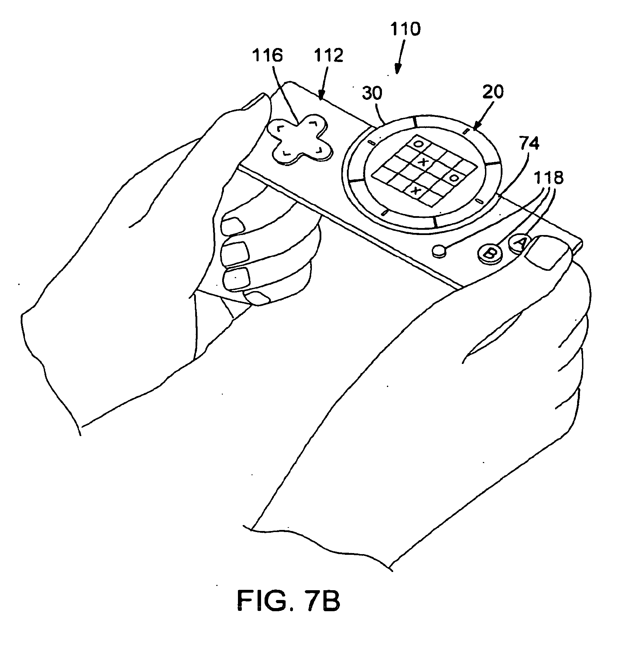

Figs. 7A and 7B are top plan and perspective views of a modular multi-function communication device shown, respectively, partly exploded to illustrate a game pad input module configured for two-hand operation and with an arcuate, depthwise tapered opening sized to receive the information display module of Figs. 1A-1 D, and completely assembled and held by a user performing two-hand operation of joystick/navigation keys and gaming buttons.

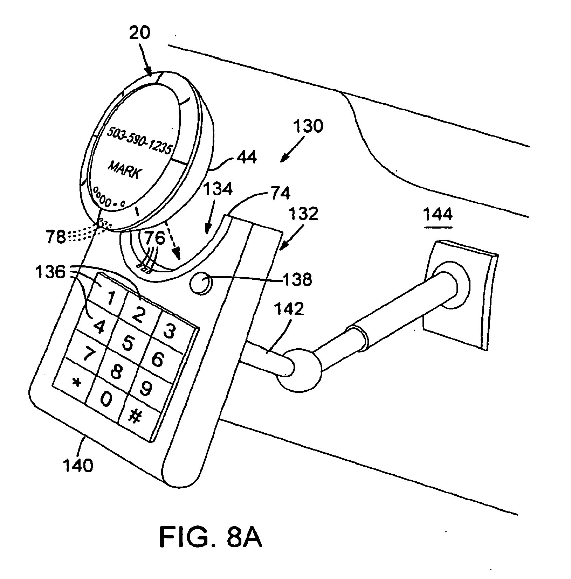

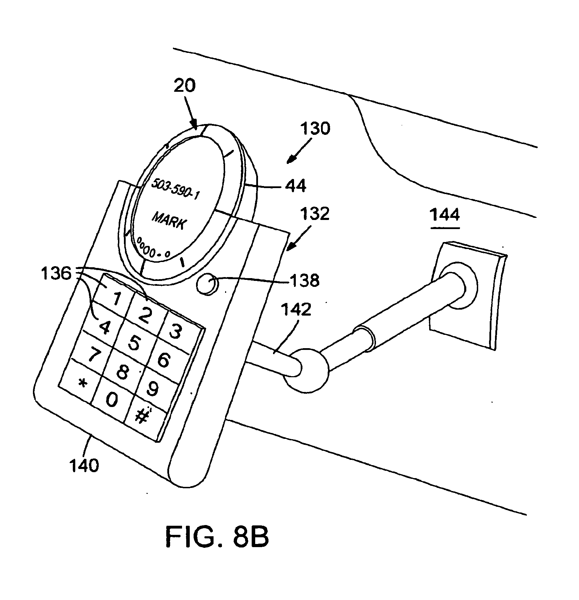

Figs. 8A and 8B are perspective views of a modular multi-function communication device shown, respectively, partly exploded to illustrate a telephone input module embodied as a vehicle dock equipped with a speaker and configured with a circular, depthwise tapered opening sized to receive the information display module of Figs. 1A-1D, and completely assembled and supported by an articulating attachment arm fixed to and extending from a vehicle dashboard.

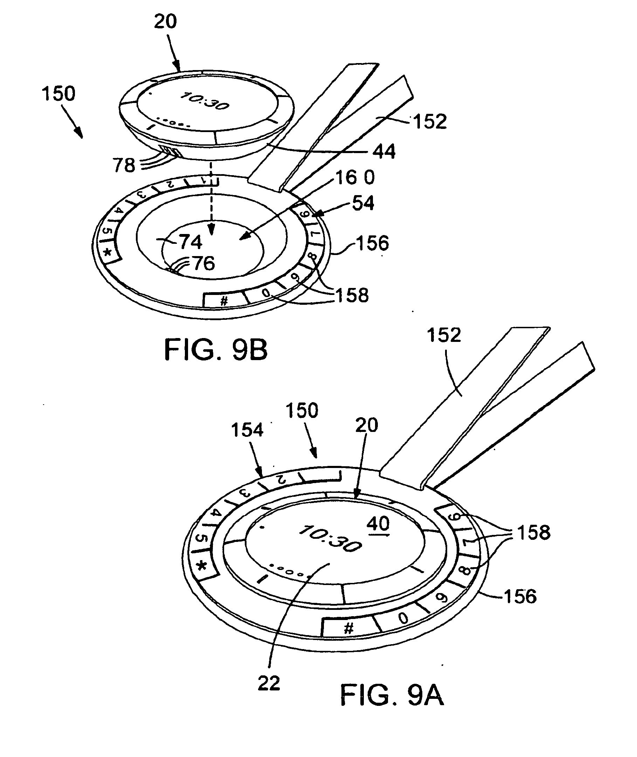

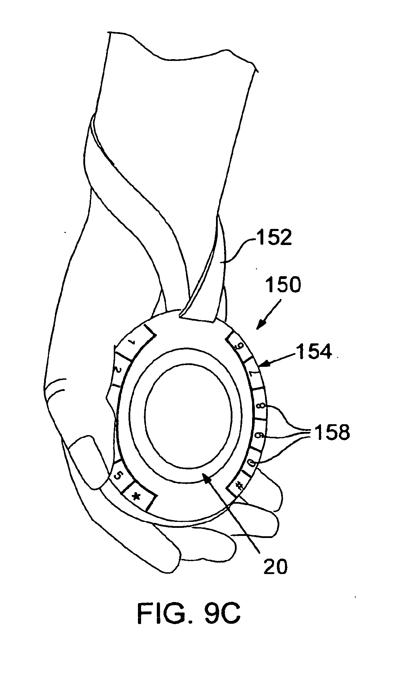

Figs. 9A, 9B, and 9C are perspective views of a modular multi-function communication device shown, respectively, completely assembled, partly exploded to illustrate a telephone input module embodied as a hand-held medallion in the form of an annular keypad having a circular, depthwise tapered central opening sized to receive the information display module of Figs. 1A-1D, and held in the palm of a user's right hand and secured by a strap around the user's wrist.

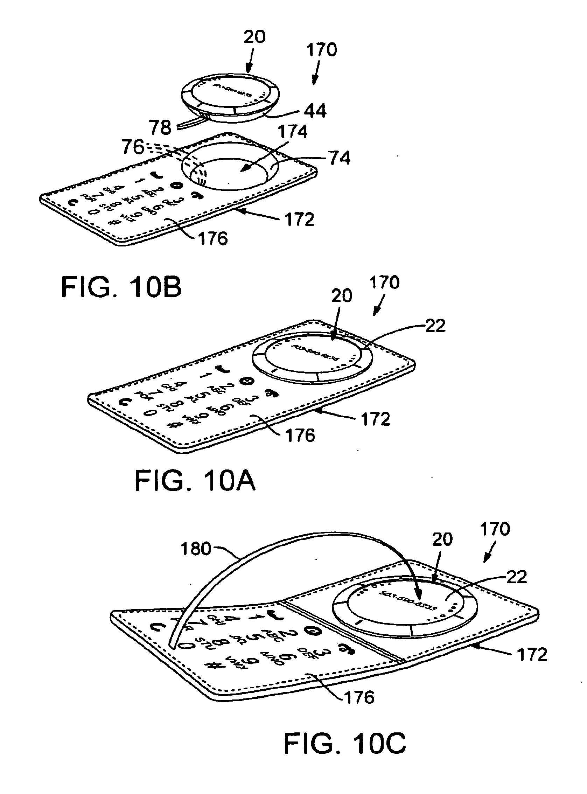

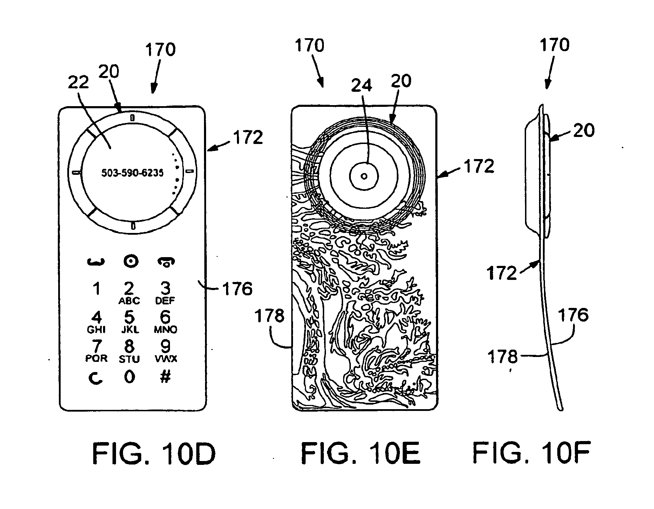

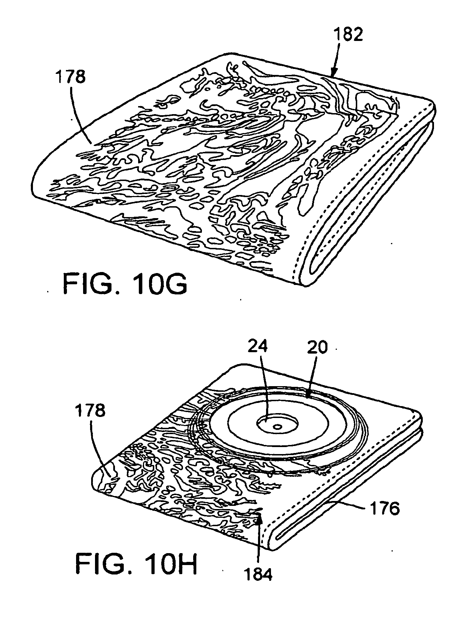

Figs. 10A, 10B, and 10C are perspective views of the inside surface of a foldable modular multi-function communication device shown, respectively, completely assembled in an unfolded state, partly exploded in an unfolded state to illustrate a telephone input module embodied as a flexible keypad having a circular, depthwise tapered opening sized to receive the information display module of Figs. 1A-1D, and partly closed in a direction to fold the inside surface on itself; Figs. 10D and 10E are respective inside surface and outside surface elevation views and Figs. 10F is a side profile elevation view of the modular multi-function communication device of Figs. 10A-10C; and Figs. 10G and 10H show, respectively, the design pattern and image camera portions of the outside surface of the modulator multi-function communication device of Fig. 10E completely closed with the inside surface completely folded on itself.

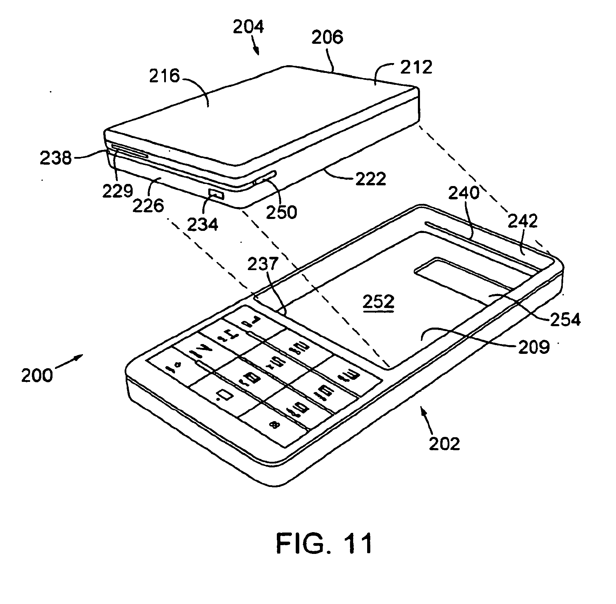

Fig. 11 is a perspective view of a modular multi-function communication device shown partly exploded to illustrate a mobile telephone keypad configured to receive an information display module of rectangular shape and implemented with touchscreen display technology.

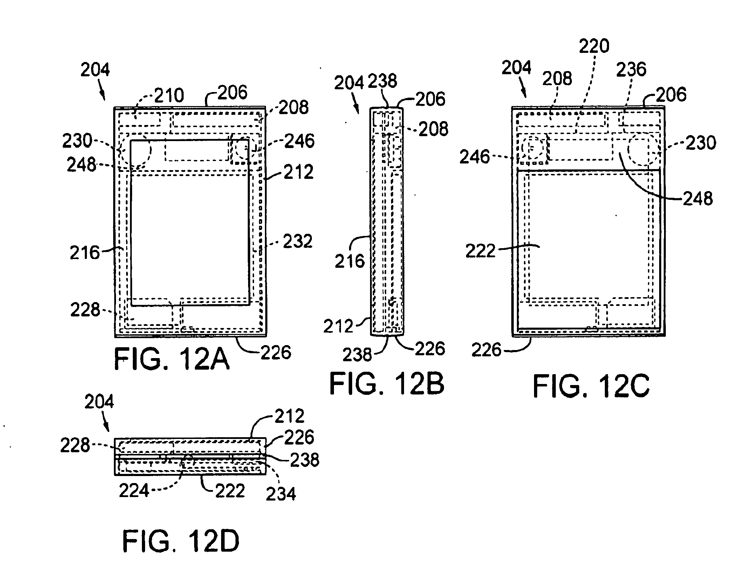

Figs. 12A, 12B, 12C, and 12D are, respectively, front, side elevation, rear, and bottom plan views of the information display module of Fig. 11.

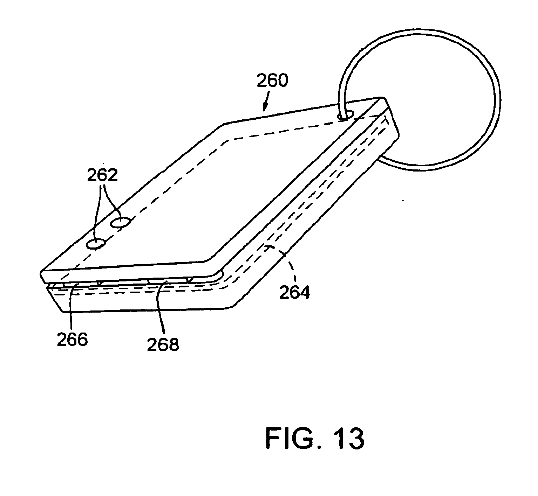

Fig. 13 is a perspective view of a key-fob that cooperates with the information display module of Figs. 12A-12D to provide it with a loss prevention feature.

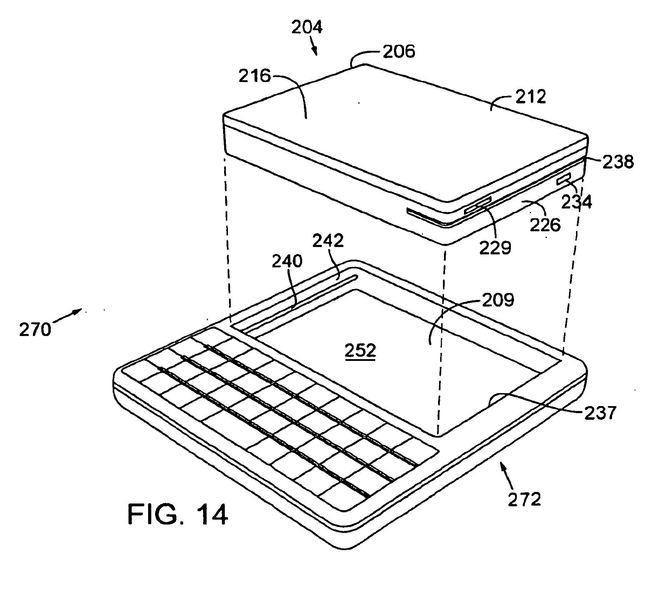

Fig. 14 is a perspective view of a modular multi-function communication device shown partly exploded to illustrate a personal digital assistant (PDA) configured to receive the information display module of Figs. 12A-12D.

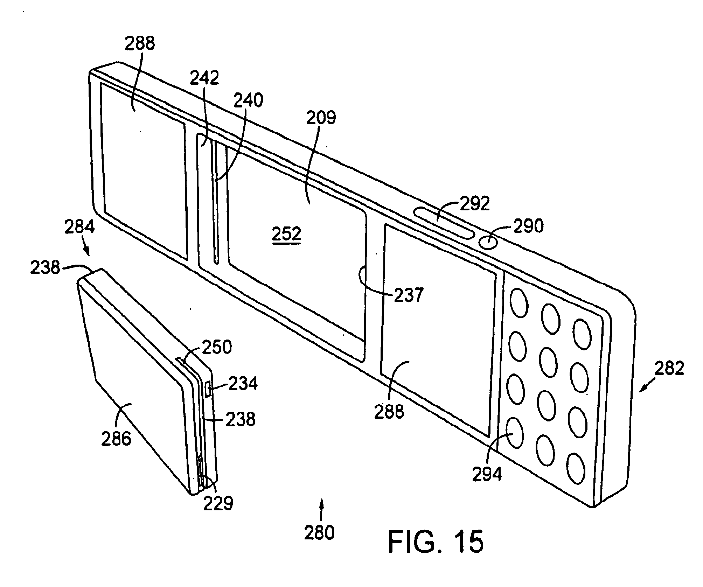

Fig. 15 is a perspective view of a modular multi-function communication device shown partly exploded to illustrate a multi-purpose audio player configured to receive an information display module of a type similar to that of Figs. 12A-12D.

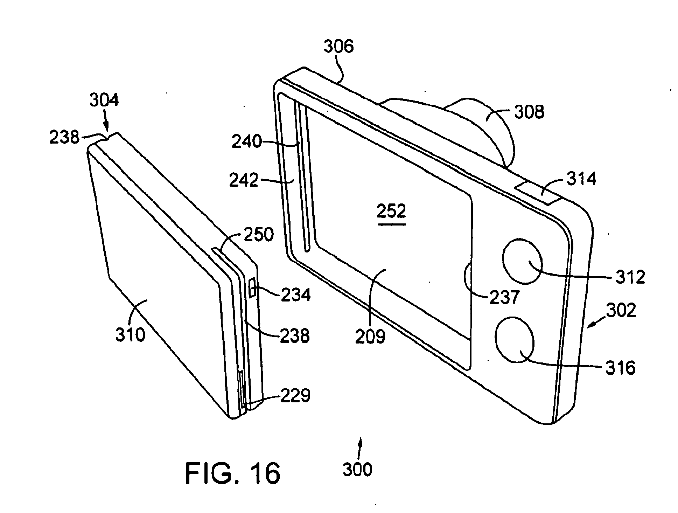

Fig. 16 is a perspective view of a modular multi-function communication device shown partly exploded to illustrate an image camera with acquired image transmission capability and configured to receive an information display module of a type similar to that of Figs. 12A-12D.

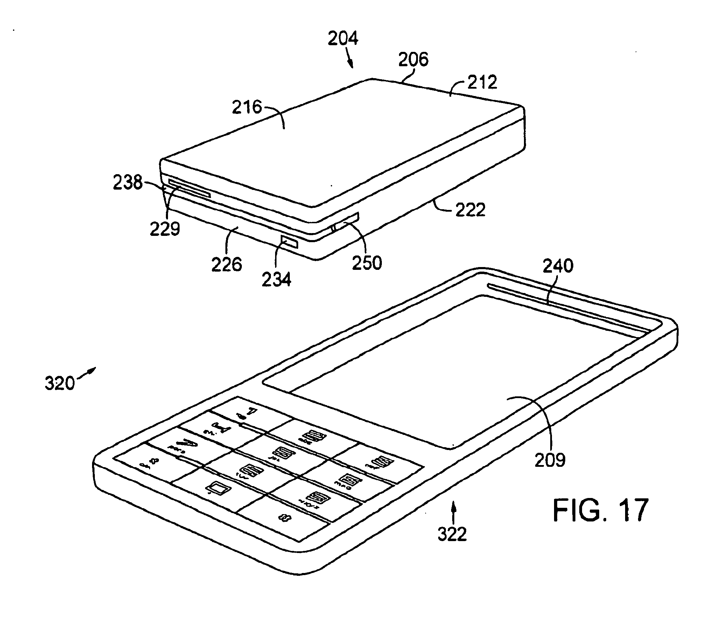

Fig. 17 is a perspective view of a modular multi-function communication device shown partly exploded to illustrate an ultra-thin mobile telephone keypad configured to receive the information display module of Figs. 12A-12D.

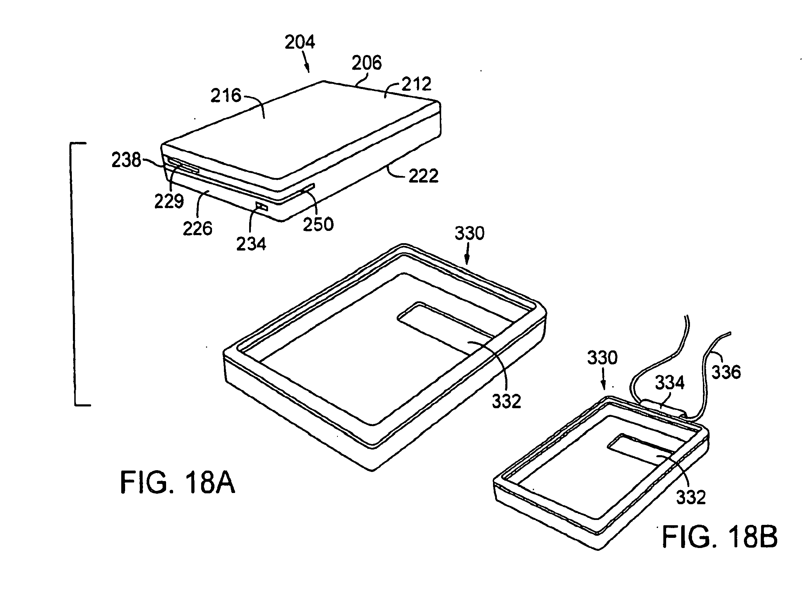

Figs. 18A and 18B are perspective views of an accent cover for the information display module of Fig. 11 shown, respectively, partly exploded to illustrate how the accent cover fits over the back surface and side margins of the information display module and separately to illustrate the accent cover fitted with a loop through which a cord is laced to enable a user to wear the information display module as a custom-styled fashion accessory.

### Detailed Description of Preferred Embodiments

Preferred embodiments of the POD transform the mobile telephone, text message, photographic or video image acquisition, music listening, video watching, or video game experience by offering a modular multi-function communication device that can be easily and affordably customized to meet users' exact needs and desires through a variety of interchangeable attachments. POD is a flexible system based on a shared information delivery module or puck 20, a personable, compact embodiment of which is shown in Figs. 1A, 1B, 1C, and 1 D. Puck 20 preferably embodies a minimal, elegant shape (e.g., round, square, or rectangular) and fits comfortably in hand on its own, can be worn as a fashion statement through jewelry such as a necklace (Fig. 5A) or wrist watch (Fig. 3A), or can be transformed by a number of other information input or keypad modules (Figs. 2A, 6A, 7A, 8A, 9A, 10A, 11A, 14A, and 15) in many different forms, materials, finishes, and colors.

With reference to Figs. 1A, 1B, 1C, and 1D, puck 20 is an information delivery module that includes on its front side a display screen 22, on its rear side an image camera 24, and in its interior a power source (not shown), such as a battery, and associated internal electronic circuitry (not shown) that provides signals for delivery of information to a user without user stimulus, with user stimulus, or both. Internal electronic circuitry includes communication signal processing circuitry for receiving, transmitting, or receiving and transmitting one or more of cellular telephone, image camera, and electronic message signals; image display symbology and patterns; or other communication signals presenting visual or audible information to a user. The receipt of cellular telephone, video, and e-mail message signals and the display of image patterns (e.g., time of day) are typically accomplished without coincident user stimulus. Control buttons 30 positioned on a top annular rim 34 at a periphery 36 of puck 20 may be actuated by a user to set a display mode (e.g., clock face or decorative pattern), enable or disable certain functions (e.g., transfer cellular telephone call to voice message), or control certain operating conditions (e.g., control navigation through menu structure). Alternatively and more preferably, the user-controlled actions described above are accomplished by providing a touchscreen (implemented with currently available touch sensing technology) as display screen 22 and touching by the user of function actuation areas of the touchscreen to select the desired functional operation.

Figs. 1A, 1B, and 1D show puck 20 in the form of a disk having a generally flat front surface 40 and a generally flat rear surface 42. Front surface 40 is of greater area than that of rear surface 42. A beveled side surface 44 interconnecting front and rear surfaces 40 and 42 is sized to mate with a complementary depthwise tapered side surface of any one of many information input module embodiments, several examples of which are described in detail below.

Figs. 2A, 2B, and 2C show a modular communication device 50 that includes an information input module styled as a conventional mobile telephone form factor keypad 52. Keypad 52 exhibits on its upper surface 54 a conventional set of keypad buttons 56 and receives puck 20 in a circular aperture 58, as shown in Fig. 2B.

Figs. 3A, 3B, and 3C show a modular communication device 60 that includes an information input module embodied as a keypad styled as a wrist watch band 62. Wrist watch band 62 is made of a flexible, resilient electronic circuit board substrate material, such as Kapton™ polyimide film manufactured by DuPont, which a user can configure to a desired shape and exhibits memory properties that retain the user-configured shape. Watch band 62 exhibits on its outside surface 64 a conventional set of keypad buttons 66 and receives puck 20 in a circular aperture 68, as shown in Fig. 3B. Figs. 4A, 4B, and 4C show watch band 62 in a folded state representing the shape assumed when a user wears wrist watch modular communication device 60. Figs. 4D and 4E show watch band 62 in an unfolded, flat state, illustrating, respectively, its inside surface 70 and image camera 24 of puck 20, and its outside surface 64 with keypad buttons 66 and display surface 22 of puck 20.

With reference to Figs. 2B and 3B, each of circular aperture 58 of keypad 52 and circular aperture 68 of watch band 62 has an inner side surface 74 of complementary beveled shape to that of beveled side surface 44 of puck 20. Electrical contacts 76 positioned on inner side surface 74 provide an interface to deliver signals to and receive signals from corresponding electrical contacts 78 on side surface 44 (Fig. 1 B) of puck 20 when it is installed in aperture 58 or 68. Substituting infrared light transmitter and sensor devices for electrical contacts 76 and 78 provides an alternative communication link interface for delivering signals to and receiving signals from puck 20 when it is installed in an information input module. Figs. 2A and 3A show puck 20 installed in keypad 52 and wrist watch band 62 to form, respectively, conventional mobile telephone form factor modular communication device 50 and wrist watch modular communication device 60. Figs. 2C and 3C show, respectively, conventional mobile telephone form factor modular communication device 50 held in a user's hand and wrist watch modular communication device 60 worn on a user's wrist.

Figs. 5A, 5B, 5C, and 5D show an information delivery module adapted to be worn as a necklace pendant 80. Necklace pendant 80 includes puck 20 with a recess 82 formed in its side surface 44 to receive and lock in place an ornamental stem 84. Stem 84 has a free end 86 in which an aperture 88 is formed and sized to receive a necklace 90. Fig. 5A shows a telephone number appearing on display screen 22 of necklace pendant 80 to indicate the identity of the source of an incoming call to puck 20 configured to operate as a cellular telephone. Fig. 5B shows the rear side of puck 20 where the aperture of image camera 24 is located. Fig. 5D shows a clock face appearing on display screen 22 of necklace pendant 80 to represent one possible user selectable steady-state display pattern and source of time of day information. Withdrawing stem 84 from recess 82 enables installation of puck 20 in, for example, keypad 52 or wrist watch band 62 to enable a user to use puck 20 in a different mode in accordance with the keypad module selected.

Figs. 6A, 6B, 6C, 6D, and 6E show a hand-held modular communication device 100 that includes a small-scale, full-function keyboard 102 having in its top side margin a centrally located arcuate cutout 104, into which puck 20 can be inserted, and a set of keys 106. In this embodiment, electrical contacts 78 on side surface 44 of puck 20 are positioned to align with electrical contacts 76 on open-ended inner side surface 74. Full-function keyboard 102 is especially suited for use with puck 20 configured for use in response to two-hand user operation as a personal digital assistant (PDA) or text messaging module.

Figs. 7A and 7B show a hand-held modular communication device 110 that includes a game pad module 112 having in its top side margin a centrally located arcuate cutout 114, into which puck 20 can be inserted, and two sets of game control actuators 116 and 118. Game control actuators 116 and 118 represent, respectively, joystick/navigation keys and gaming buttons. Communication device 110 is of similar construction to that of communication device 100 in that electrical contacts 78 on side surface 44 of puck 20 are positioned to align with electrical contacts 76 on open-ended inner side surface 74. Placement of puck 20 in game pad module 112 and programming of puck 20 causes communication device 110 to operate in a gaming mode. Puck 20 can be programmed to perform other functions, such as receive cellular telephone calls, while operating in gaming mode.

Figs. 8A and 8B show a modular communication device 130 embodied as a vehicle dock input module 132 having in its top side margin a centrally located arcuate cutout 134 into which puck 20 can be inserted. Electrical contacts 78 on side surface 44 of puck 20 are positioned to align with electrical contacts 76 on open-ended inner side surface 74. Vehicle dock input module 132 includes a keypad composed of keys 136 and a separate pickup/hangup button 138, all of which are sufficiently large to accommodate easy activation and numeric entry by a user during vehicle operation. Vehicle dock input module 132 is equipped with a speaker 140 to permit hands-free operation upon initial placement or receipt of a telephone call. An articulating attachment arm 142 secured to the rear surface of vehicle dock input module 132 extends from and is fixed to a vehicle dashboard 144, such as that of an automobile, to allow user positioning of communication device 130.

Figs. 9A, 9B, and 9C show a hand-held modular communication device 150 configured as a medallion that is sized to fit in the palm of a user's hand and secured by a strap 152 around the user's wrist. An annular information input module 154 includes distributed around its periphery 156 individual numeric keypads 158 that are readily accessible to a user. Annular information input module 114 has a central circular aperture 160 into which puck 20 can be inserted so that electrical contacts 78 on side surface 44 of puck 20 are positioned to align with electrical contacts 76 on open-ended inner side surface 74. Modulator communication device 150 is especially suited for use as a cellular telephone.

Figs. 10A, 10B, 10C, 10D, 10E, 10F, 10G, and 10H show a modular communication device 170 that folds to the shape of a wallet and includes a keypad and input module 172 having a circular aperture 174 into which puck 20 can be installed. Communication device 170 exhibits a display screen layout similar to that of Fig. 2A with puck 20 installed, but input module 172 is made of the same flexible, resilient electronic circuit board material as that of which wrist watch band 62 is made. Electrical contacts 78 on side surface 44 of puck 20 are positioned to align with electrical contacts 76 on inner side surface 74 of circular aperture 174, as shown in Fig. 10B. Fig. 10D shows display screen 22 of puck 20 and Fig. 10E shows image camera 24 of puck 20 on an inside surface 176 and an outside surface 178, respectively, of modular communication device 170.

Fig. 10C shows a curved direction arrow 180 indicating the folding direction of input module 172 to completely close inside surface 176 on itself and thereby cause modular communication device 170 to appear as shown in Figs. 10G and 10H. Fig. 10G shows a design pattern portion 182 of outside surface 178, and Fig. 10H shows an image camera portion 184 of outside surface 178.

Fig. 11 is a partly exploded perspective view of a hand-held modular communication device 200 that includes an information input module 202 with a numerical keypad and a puck 204 equipped with a cellular telephone, a flash camera, and an audio speaker. Fig. 11 is shown partly exploded to illustrate, with reference also to Figs. 12B and 12D (described below), the matability of puck 204 with information input module 202, which has a rectangular opening 209 that receives puck 204. Information input module 202 and puck 204 are each of rectangular shape.

Figs. 12A, 12B, 12C, and 12D show multiple views of puck 204 having a thin, rectangular body with generally planar opposite major surfaces. Puck 204 has near its top side margin 206 a cellular telephone antenna 208 and a Bluetooth short range radio link antenna 210. Puck 204 has on its front surface 212 a touchscreen display surface 216 that is implemented with capacitive touch sensing technology, such as TouchPad™ capacitive technology of Synaptics Inc., Santa Clara, CA. For aesthetic and functional reasons, display surface 216 preferably occupies as much as possible of the area of front surface 212 of puck 204. Electronic circuitry, including signal control and processing circuitry and operational memory circuitry, contained within puck 204 enables cellular telephone operation in association with antenna 208 and an audio speaker 220 exposed in an opening in a back surface 222, near top side margin 206 of puck 204. A microphone 224 is placed at a bottom side margin 226 of puck 204. Display surface 216 and audio speaker 220 located on opposite surfaces 212 and 222, respectively, of puck 204 promote the cleanliness of display surface 216. Such placement of display surface 216 and audio speaker 220, as compared with a side-by-side arrangement of them along either front surface 212 or back surface 222, affords a reduction in overall length or width of puck 204. Reducing the length or width of puck 204 makes it more compact and thereby facilitates coverage by display surface 216 of as much as possible the area of front surface 212 of puck 204. The electronic circuitry of puck 204 provides operational function actuation areas on touchscreen display surface 216. The electronic circuitry is also capable of providing a keypad image on touchscreen display surface 216 to enable separate cellular telephone use from information input module 202, if desired. Puck 204 holds a SIM memory card 228 for storing telephone numbers and personal settings and a vibrating alarm 230 functioning as a silent telephone ringing device. SIM memory card 228 is positioned behind a battery 232 and is user-accessible from outside of puck 204 through a slot 229 in bottom side margin 226, and vibrating alarm 230 is positioned near top side margin 206. The presence of Bluetooth radio link antenna 210 enables use of a remote, user-worn microphone.

To accommodate placement in information input modules configured with different communication signal device locations, puck 204 is equipped with two sets of redundant, simultaneously operating infrared (IR) communication emitters and detectors, one of which sets associated with an IR link window 234 located in bottom side margin 226 of puck 204 and the other of which sets associated with an IR link window 236 in back surface 222 of puck 204. The redundant IR links ensure compatible communication links between puck 204 and different information input modules, because the shape and style of each of them can necessitate placement of the communication link window of an information input module in one of multiple established locations. In the case of information input module 202 of Fig. 11, IR link window 234 of puck 204 is spatially aligned with its corresponding IR link window in a bottom side wall 237 of opening 209 in information input module 202. In the case of an information input module that is configured to mate with puck 204 but leave open its bottom side margin 226, IR link window 236 on back surface 222 provides the communication link. Examples of a puck module in which a back surface IR link window would be spatially aligned with an IR link window on a flat surface region of an information input module include a jewelry piece and a wallet of the types shown in Figs. 5A and 10A, respectively.

Figs. 12B and 12D show shallow grooves 238 extending along the lengths of and located generally centrally in top side margin 206 and bottom side margin 226 of puck 204. Each of the grooves 238 supports on its bottom surface a linear electrical conductor. The electrical conductors supported in the two grooves 238 of each puck 204 preferably function as positive and negative electrodes for delivery of electrical power to puck 204. Electrical power is delivered to puck 204 by electrically conductive rods 240 (only one shown) fitted along opposite side walls 237 and 242 of opening 209 in information input module 202. Rods 240 are positioned on side walls 237 and 242 of opening 209 to provide a positive, releasable snap fit into their corresponding grooves 238 of puck 204 when it is mated with information input module 202. In this configuration, information input module 202 functions as a battery charger or a conduit for charging current for battery 232 in puck 204. Rods 240 may also be adapted to function as an alternative data and control communication link between puck 204 and information input module 202.

Fig. 12C shows a camera 246 and its associated flash assembly 248 housed in locations for operation through corresponding openings in back surface 222 of puck 204.

A recessed on-off button 250 in puck 204 makes it compatible with the matable connection in opening 209 of information input module 202. Information input module 202 has a floor 252 with an opening 254 for one or both of passage of sound emissions from audio speaker 220 and image acquisition by camera 246 and its associated flash assembly 248. Skilled persons will appreciate that pod 204 can perform certain functions separately from information input module 202. For example, if puck 204 is programmed such that touchscreen display surface 216 presents an operational dial touchpad, certain mobile telephone functions can be performed by puck 204 apart from information input device 202. There are many possible operational functions and design configurations, as indicated by the exemplary embodiments described.

Bluetooth radio link antenna 210 also enables implementation of a loss prevention feature in puck 204. The electronic circuitry of puck 204 transmits a continuous signal that is received by a Bluetooth radio link enabled key-fob 260 attached to a user's keychain, purse, pocket, or other personal item. Fig. 13 is a simplified block diagram of key-fob 260, which is a battery-operated device equipped with one or more light emitting diodes (LEDs) 262, functioning as a visual indicator, and an audible alarm. Electrical circuitry 264 allows a user to turn on or off electrical power to key-fob 260, adjust a distance control 266 to select the strength of the Bluetooth signal to correspond to a set threshold distance from puck 204, and adjust a volume control 268 to select the audible tone volume. Whenever the distance between key-fob 260 and puck 204 (either alone or mated with information input module 202) exceeds the user-set threshold distance, key-fob 260 generates one or both of an audible tone with the alarm or a visual signal with LEDs 262.

Fig. 14 is a partly exploded perspective view of a hand-held modular communication device 270 that includes an information input module 272 with an alphanumeric keypad and puck 204 programmed to operate as a PDA. Information input module 272 has its opening 209 sized to receive puck 204 by a snap fit into grooves 238 and deliver electrical power to puck 204 by electrically conductive rods 240. To accommodate placement in information input modules of different sizes and shapes, the electronic circuitry of puck 204 is implemented with image display control including image rotation to provide portrait or landscape image presentation. Such image rotation enables puck 204 to display information with its longer dimension in the vertical direction (e.g., Fig. 11) and with its longer dimension in the horizontal direction (e.g., Fig. 14), as dictated by nominal usage of the information input module with which puck 204 is mated. A signal delivered from the IR link window in bottom side wall 237 of information input module 272 to IR link window 234 of puck 204 provides an image rotation command that sets the image orientation.

Fig. 15 is a partly exploded perspective view of a hand-held modular communication device 280 that functions as a multi-purpose audio player. Audio player 280 includes an information input module 282 that is adapted to receive a puck 284 of the same size and shape as that of puck 204 with a touchscreen display surface 286 and configured to operate as a mobile telephone or a music player. Information input module 282 has its opening 209 sized to receive puck 284 by a snap fit into grooves 238 and deliver electrical power to puck 284 by electrically conductive rods 240. Puck 284 includes electronic circuitry producing audio signals that are transmitted through a suitable communication link to information input module 282, which houses audio speakers 288. A user touches touchscreen display surface 286 for music selection and actuation of other user-performed operational controls. Information input module 282 includes certain user-controlled command inputs, such as, for example, an electrical power switch 290, a volume control 292, and a digital touchpad 294 to enable operation of communication device 280 as a speaker phone.

Fig. 16 is a partly exploded perspective view of a hand-held modular communication device 300 that functions as an image camera with acquired image transmission capability. Image camera device 300 includes an information input module 302 that is adapted to receive a puck 304 of the same length and width dimensions as those of puck 204. Information input module 302 has fitted to its back surface 306 a lens assembly 308, and puck 304 is configured to operate as a digital camera presenting on its display surface 310 an image to be acquired and stored. Information input module 302 has its opening 209 sized to receive puck 304 by a snap fit into grooves 238 and deliver electrical power to puck 304 by electrically conductive rods 240 as described above. Information input module 302 includes certain user-controlled command inputs, such as, for example, an electrical power switch 312, camera shutter actuator 314, and lens adjustment control 316. IR link window 234 of puck 304 is spatially aligned with a corresponding IR link window of information input module 302 to deliver the user-controlled commands to puck 304 and deliver the acquired image data to information input module 302 for storage or transmission elsewhere.

Fig. 18A is a partly exploded perspective view of puck 204 and an accent cover 330 made of fabric or other material to illustrate another opportunity to customize the appearance of puck 204, when it is used separately from an information input module. Accent cover 330 is in the form of a shallow, open-top container in which puck 204 is inserted with its four side margins and back surface 222 covered, except for an opening 332 for passage of sound emissions from audio speaker 220 and image acquisition by camera 246 and its associated flash assembly 248. Fig. 18B shows accent cover 330 fitted with a loop 334 that receives a cord 336 a user can place around his or her neck to wear pod 204 as a custom-styled fashion accessory.

Fig. 17 is a partly exploded perspective view of a modular communication device 320 in which puck 204 configured to function as described with reference to Fig. 11 is mated with an ultra-thin information input module 322 in the form of a keypad. Ultra-thin keypad 322 can be made of transparent, translucent, or opaque material to customize its appearance. Although it is about one-half the thickness of puck 204, ultra-thin keypad 322 has its opening 209 sized to receive puck 204 by a snap fit into grooves 238 and deliver electrical power to puck 204 by electrically conductive rods 240. There is no floor closing the bottom portion of opening 209. Keypad 322 holds puck 204 such that its front surface 212 and back surface 222 extend beyond the major surfaces of keypad 312 to provide user access to the functions on both the front and back of puck 204.

Embodiments of the information delivery module could be equipped with voice recognition capability to respond to voice commands, enable hands-free communication, or both. Embodiments of the information input module may contain additional power supply and processing circuitry to enable the modular communication device to perform or function in a desired manner. Moreover, providing additional simulation circuitry in the information input module could enable it to perform multiple task modes (e.g., game mode and text messaging mode).

The visual appearances of the various, indefinite number of possible embodiments of the modular multi-function device or POD humanize the interaction between technology and the user. By recognizing that mobile telephones and other portable communication devices are increasingly influenced by fashion trends, applicant created POD modules in a range of shape, color, material, and finish choices that allow users to express their individual styles and fit into users' everyday environments. POD adapts to a user's lifestyle rather than requiring the user to adapt to the limitations or unappealing look of technology. The modular design approach creates a recognizable look and a trademark, while accommodating the user's desire for customization.

In a world in which face-to-face human interactions are being increasingly replaced by technology, a modular multi-function communication device that enables an inviting, compelling, and personal experience can make a profound difference in the user's everyday life. POD achieves exactly that profound difference. Unlike mobile telephones that confine the customer to one look, limited configurations, and finite functionality, the customizability of POD allows optimum personalization, configuration, and functionality for different users and use scenarios. A user can take his or her POD anywhere--from gym, to fancy dress party, to home, to office-and have it fit into each environment with ease. By combining in one device all the user's technological needs, including telephone, PDA, camera, music files, clock, and games, POD simplifies the vast realm of technology options used in everyday life with one consistent interface. At the same time, POD becomes wearable technology that enables a user to make a unique fashion statement and express personal style.

The POD design solution is more versatile and much less expensive than any other currently available customization solution, resulting in an affordable, multi-function mobile telephone or other communication device that precisely fits the individual user's needs, desires, and aesthetic sensibilities.

It will be obvious to those having skill in the art that many changes may be made to the details of the above-described embodiments without departing from the underlying principles of the invention. The scope of the present invention should, therefore, be determined only by the following claims.

## Claims

1. A modular multi-function communication device (200) that is customizable in aesthetic appearance, operational function, or both, by selectable substitution of modular components, comprising:
a portable information delivery module (204) comprising a display screen (216) and associated electronic circuitry to provide signals for delivery of information to a user at least partly without user stimulus, the information delivery module having generally planar opposing major surfaces (212, 222) and side margins (206, 226), and the information delivery module including grooves (238) having shapes and extending lengthwise along opposite ones of the side margins( 206, 226); and an information input module (202) comprising an input device that is operable in response to user-produced command signals to which the information delivery module responds to transmit information determined by the user, the information input module including a housing having opposing major surfaces at least one of which includes an opening (209) that is sized to accept placement of the information delivery module (204) for releasable electrical and mechanical connections, the opening (209) defined by an inner boundary formed by side walls (237, 242) that encompass the side margins (206, 226) of the information delivery module (204) when it is placed in the opening (209) of the information input module (202), the information input module further comprising rods (240) extending lengthwise along opposite ones of the side walls (237, 242) and being of complementary shapes to the shapes of the grooves (238) of the information delivery module (204) such that the grooves (238) receive corresponding ones of the rods (240) and provide a positive releasable snap fit for the information delivery module (204) when it is placed in opening (209) of the information input module (202).

2. The communication device (200) of claim 1, in which the information delivery module includes circuitry adapted to perform at least one of the following:
a) receive and to transmit mobile telephone communication signals;
b) receive image camera signals;
c) produce image display signals to provide visual information on the display screen; or
d) produce audio signals to provide audible information to or music entertainment for the user.

3. The communication device (200) of claim 1, in which the display screen (216) and the associated electronic circuitry are configured to produce an on-screen keypad.

4. The communication device of claim 1, in which the information delivery module (204) includes user operable control of certain available operational functions.

5. The communication device of claim 1, in which the information delivery module (204) further comprises an energy storage device (232).

6. The communication device of claim 1, in which the information input module (202) includes a keypad and/or a video camera (246, 248).

7. The communication device of claim 6, in which the information input module (202) includes a keypad and the information delivery module (204) provides communication signal access to the keypad to enable performance of multiple communication device functions.

8. The communication device of claim 7, in which the communication device functions include one or more of mobile telephone, personal digital assistant, image camera, clock, audio player, and gaming device functions.

9. The communication device of claim 1, in which the rods (240) are made of electrically conductive material and the grooves (238) hold electrical conductors.

10. The communication device of claim 9, in which the rods (240) and the electrical conductors cooperate to:
a) deliver electrical power to the information delivery module (204) or
b) function as a communication link between the information delivery (204) and input modules (202).

11. The communication device of claim 1, further comprising a distance indicating device (260, 262) that produces an indication in response to a distance between the information input module (202) and the information delivery module (204) exceeding a threshold distance.

12. A portable information delivery module (204) that is matable with an information input module (202) to form a unitary modular multi-function communication device (200), the information input module (202) having opposing major surfaces at least one of which includes an opening (209) defined by an inner boundary formed by side walls (237, 242), and the information input module (202) including rods (240) having shapes and extending lengthwise along opposite ones of the side walls (237, 242), comprising:
a body containing electronic circuitry to provide signals for delivery of information to a user at least partly without user stimulus, the body having side margins (226) and generally planar opposing major surfaces (212, 222) having outer boundaries that define a perimeter, the perimeter being sized and configured for placement in the opening (209) of the information input module (202);
a display screen (216) supported by one of the opposing major surfaces (212) of the information delivery module (204) and communicating with the electronic circuitry to present at least some of the information to the user; and
grooves (238) extending lengthwise along opposite ones of the side margins (226) and being of complementary shapes to the shapes of the rods (240) to receive corresponding ones of the rods (240) and provide a positive releasable snap fit for the information delivery module (204) when it is placed in the opening of the information input module (202).

13. The information delivery module (204) of claim 12, in which the display screen is of a touchscreen type.

14. The information delivery module (204) of claim 12, in which the electronic circuitry includes circuitry enabling mobile telephone operation.

15. The information delivery module of claim 12, further comprising an accent cover (330) configured to cover at least part of the body to provide it with a customized appearance.

16. The information delivery module of claim 12, in which the body is matable with each of multiple information input modules configured in different locations with communication signal devices that contribute to establishing infrared communication links, the information delivery module (204) further comprising:
a first signal communication device (234) that contributes to establishing a first infrared communication link; and
a second signal communication device (236) that contributes to establishing a second, redundant infrared communication link, the first and second signal communication devices being positioned on the body at different locations (226, 237) to establish a compatible infrared communication link between each one of the multiple information input modules configured with communication signal devices in different known locations when the information delivery (204) and input (202) modules are mated.

## Patentansprüche

1. Modulares Multifunktions-Kommunikationsgerät (200), das hinsichtlich ästhetischer Erscheinung, Bedienungsfunktion oder beides durch wählbare Substitution modularer Bestandteile individuell anpassbar ist, aufweisend:
ein tragbares Informations-Zuliefer-Modul (204) mit einem Anzeige-Bildschirm (216) und einer zugehörigen elektronischen Schaltung, um Signale zum Zustellen von Information an einen Benutzer zumindest teilweise ohne Benutzerimpuls vorzusehen, wobei das Informations-Zuliefer-Modul (204) im Allgemeinen planare gegenüberliegende Hauptflächen (212, 222) und Seitenränder (206, 226) hat, wobei das Informations-Zuliefer-Modul (204) Vertiefungen (238) der Gestalt hat, dass sie sich längsweise über die jeweils gegenüberliegenden Seitenränder (206, 226) erstrecken; und ein Informations-Eingabe-Modul (202), das ein Eingabegerät aufweist, das in Antwort auf von einem Benutzer erzeugten Befehlssignale betätigbar ist, wozu das Informations-Zuliefer-Modul (204) antwortet, um Informationen zu übertragen, die durch den Benutzer bestimmt wurden, wobei das Informations-Eingabe-Modul (202) ein Gehäuse mit gegenüberliegenden Hauptflächen (212, 222) aufweist, von denen zumindest eine eine Öffnung (209) hat, die in ihrer Größe so bemessen ist, dass das Informations-Zuliefer-Modul (204) für lösbare elektrische und mechanische Anschlüsse einsetzbar ist, wobei die Öffnung (209) durch eine innere von Seitenwänden (237, 242) gebildeten Grenzlinie definiert ist, die die Seitenränder (206,226) des Informations-Zuliefer-Moduls (204) umfassen, wenn es in der Öffnung (209) des Informations-Eingabe-Moduls (202) eingesetzt ist, wobei das Informations-Eingabe-Modul (202) ferner Leisten (240) aufweist, die sich längsweise über gegenüberliegende Seitenwände (237,242) erstrecken, und komplementäre Formen zu den Formen der Vertiefungen (238) des Informations-Zuliefer-Moduls (204) haben, so dass die Vertiefungen (238) entsprechende der Leisten (240) aufnehmen und einen positiven, lösbaren Schnappsitz für das Informations-Zuliefer-Modul (204) vorsehen, wenn es in der Öffnung (209) des Informations-Eingabe-Moduls (202) platziert ist.

2. Kommunikationsgerät (200) nach Anspruch 1, bei dem das Informations-Zuliefer-Modul (204) eine zum Ausführen von zumindest einer der folgenden Aspekte angepasste Schaltung aufweist:
a) Empfangen und Übertragen von mobilen Telefon-Kommunikations-Signalen;
b) Erhalten von Bildkamera-Signalen;
c) Erzeugen von Bild-Wiedergabesignalen zur Schaffung von visueller Information auf dem Bildschirm;
oder
d) Erzeugen von Audiosignalen zur Schaffung von hörbarer Information für oder als musikalische Unterhaltung an den Benutzer.

3. Kommunikationsgerät (200) nach Anspruch 1, wobei der Anzeigebildschirm (216) und der zugehörige elektronische Schaltkreis konfiguriert sind, um eine Bildschirm-Tastatur zu erzeugen.

4. Kommunikationsgerät (200) nach Anspruch 1, wobei das Informations-Zuliefer-Modul (204) eine Benutzer-bedienbare Steuerung für bestimmte zur Verfügung gestellte operative Funktionen aufweist.

5. Kommunikationsgerät (200) nach Anspruch 1, bei dem das Informations-Zuliefer-Modul (204) ferner eine Energiespeichervorrichtung (232) aufweist.

6. Kommunikationsgerät (200) nach Anspruch 1, bei dem das Informations-Eingabe-Modul (202) eine Tastatur und/oder eine Videokamera (246,248) aufweist;

7. Kommunikationsgerät (200) nach Anspruch 6, bei dem das Informations-Eingabe-Modul (202) eine Tastatur aufweist, und das Informations-Zuliefer-Modul (204) einen Kommunikations-Signalzugang zu der Tastatur schafft, um eine Ausführung von Funktionen für multiple Kommunikations-Vorrichtungen zu ermöglichen.

8. Kommunikationsgerät (200) nach Anspruch 7, wobei die Kommunikations-Gerätefunktionen eine oder mehrere Funktionen aus der Gruppe aufweisen: Mobiltelefone, persönlicher digitaler Assistent, Bildkamera, Uhr, Audioplayer und Spielekonsole.

9. Kommunikationsgerät (200) nach Anspruch 1, bei dem die Leisten (240) aus elektrisch leitfähigem Material gefertigt sind und die Vertiefungen (238) elektrische Leiter halten.

10. Kommunikationsgerät (200) nach Anspruch 9, bei dem die Leisten (240) und die elektrischen Leiter kooperieren, um:
a) elektrische Energie an das Informations-Zuliefer-Modul (204) zu liefern, oder
b) als Kommunikationsverbindung zwischen dem Informations-Zuliefer-Modul (204) und Eingabe-Modul (202) zu funktionieren.

11. Kommunikationsgerät (200) nach Anspruch 1, ferner aufweisend eine Abstands-Anzeigevorrichtung (260,262), die eine Anzeige in Antwort auf eine Distanz zwischen dem Informations-Eingabe-Modul (202) und dem Informations-Zuliefer-Modul (204) bei Überschreitung einer Schwellenwert-Distanz schafft.

12. Tragbares Informations-Zuliefer-Modul (204) das mit einem Informations-Eingabe-Modul (202) zusammenfügbar ist, um ein unitäres, modulares Multifunktions-Kommunikations-Gerät (200) zu bilden, wobei das Informations-Eingabe-Modul (202) gegenüberliegende Hauptflächen hat, von denen zumindest eine eine Öffnung (209) aufweist, die durch eine innere Grenze definiert ist, die durch Seitenwände (237,242) gebildet ist, und wobei das Informations-Eingabe-Modul (202) Leisten (240) aufweist, die sich längsweise entlang gegenüberliegender Seitenwände (237,242) erstreckend geformt sind, aufweisend:
einen elektronischen Schaltkreis aufnehmenden Körper, um Signale zum Liefern von Informationen an einen Benutzer zumindest teilweise ohne Benutzerimpuls zuzustellen, wobei der Körper Seitenränder (226) hat und im Allgemeinen planare, gegenüberliegende Hauptflächen (212,222) mit Außengrenzen, die einen Umfang definieren, wobei der Umfang in seiner Größe so bemessen und konfiguriert ist, um in der Öffnung (209) des Informations-Eingabe-Modul (202) platziert zu werden;
ein Anzeigebildschirm (216) der durch eine der gegenüberliegenden Hauptflächen (212) des Informations-Zuliefer-Moduls (204) getragen ist und mit der elektronischen Schaltung kommuniziert, um zumindest einige der Informationen dem Benutzer anzuzeigen; und
Vertiefungen (238) die sich längsweise entlang gegenüberliegender Seitenränder (226) erstrecken und komplementäre Formen zu den Formen der Leisten (240) haben, um die entsprechenden jeweiligen Leisten (240) aufzunehmen und einen positiven, lösbaren Schnappsitz für das Informations-Zuliefer-Modul (204) zu schaffen, wenn es in der Öffnung des Informations-Eingabe-Moduls (202) platziert ist.

13. Informations-Zuliefer-Modul (204) nach Anspruch 12, wobei der Anzeigebildschirm vom Typ eines Touchscreens ist.

14. Informations-Zuliefer-Modul (204) nach Anspruch 12, bei dem die elektronische Schaltung eine Schaltung zum Ermöglichen eines mobilen Telefonbetriebs beinhaltet.

15. Informations-Zuliefer-Modul (204) nach Anspruch 12, ferner aufweisend eine akzentuierte Abdeckung (330), die dazu bestimmt ist, zumindest einen Teil des Körpers abzudecken, um ihn mit einem individuellen Erscheinungsbild zu versehen.

16. Informations-Zuliefer-Modul (204) nach Anspruch 12, bei dem der Körper zusammenfügbar ist mit jedem der multiplen Informations-Eingabe-Module (202), die für unterschiedliche Stellen mit Kommunikations-Signal-Geräten konfiguriert sind, die Infrarot-Kommunikations-Verbindungen vorsehen, wobei das Informations-Zuliefer-Modul (204) ferner aufweist:
ein erstes Signal-Kommunikations-Gerät (234), das eine erste Infrarot-Kommunikations-Verbindung etabliert; und
ein zweites Signal-Kommunikations-Gerät (236), das eine zweite redundante Infrarot-Kommunikations-Verbindung etabliert, wobei das erste und zweite Signal-Kommunikations-Gerät auf dem Körper zu unterschiedlichen Stellen (226, 237) positioniert sind, um eine kompatible Infrarot-Kommunikations-Verbindung zwischen jedem der multiplen Informations-Eingabe-Module (202) zu etablieren, die mit Kommunikations-Signal-Geräten in unterschiedlich bekannten Stellen konfiguriert sind, wenn die Informations-Zuliefer- (204)- und Eingabe-(202)-Module gepaart sind.

## Revendications

1. Dispositif de communication multifonction modulaire (200) qui est personnalisable en termes d'aspect esthétique, de fonction opérationnelle, ou des deux, par substitution sélectionnable de composants modulaires, comprenant :
un module de livraison d'informations portatif (204) comprenant un écran d'affichage (216) et des circuits électroniques associés pour fournir des signaux en vue d'une livraison d'informations à un utilisateur au moins en partie sans stimulus d'utilisateur, le module de livraison d'informations ayant des surfaces opposées importantes généralement planes (212, 222) et des marges latérales (206, 226), et le module de livraison d'informations incluant des rainures (238) ayant des formes et s'étendant longitudinalement le long de marges opposées parmi les marges latérales (206, 226) ; et un module d'entrée d'informations (202) comprenant un dispositif d'entrée qui est opérationnel en réponse à des signaux de commande produits par l'utilisateur auxquels le module de livraison d'informations répond pour transmettre les informations déterminées par l'utilisateur, le module d'entrée d'informations incluant un boîtier ayant des surfaces opposées importantes dont au moins une inclut une ouverture (209) qui est dimensionnée pour accepter un placement du module de livraison d'informations (204) pour des connexions électriques et mécaniques libérables, l'ouverture (209) étant définie par une frontière intérieure formée par des parois latérales (237, 242) qui englobent les marges latérales (206, 226) du module de livraison d'informations (204) lorsqu'il est placé dans l'ouverture (209) du module d'entrée d'informations (202), le module d'entrée d'informations comprenant en outre des tiges (240) s'étendant longitudinalement le long de parois opposées parmi les parois latérales (237, 242) et étant de formes complémentaires aux formes des rainures (238) du module de livraison d'informations (204) de telle sorte que les rainures (238) reçoivent des tiges correspondantes parmi les tiges (240) et assurent un emboîtement par encliquetage libérable positif pour le module de livraison d'informations (204) lorsqu'il est placé dans l'ouverture (209) du module d'entrée d'informations (202).

2. Dispositif de communication (200) selon la revendication 1, dans lequel le module de livraison d'informations inclut des circuits adaptés pour exécuter au moins l'une des actions suivantes :
a) recevoir et transmettre des signaux de communication de téléphone mobile ;
b) recevoir des signaux d'appareil à image ;
c) produire des signaux d'affichage d'image pour fournir des informations visuelles sur l'écran d'affichage ; ou
d) produire des signaux audio pour fournir à l'utilisateur des informations audibles ou un divertissement musical.

3. Dispositif de communication (200) selon la revendication 1, dans lequel l'écran d'affichage (216) et les circuits électroniques associés sont configurés pour produire un clavier sur écran.

4. Dispositif de communication selon la revendication 1, dans lequel le module de livraison d'informations (204) inclut une commande de certaines fonctions opérationnelles disponibles, exécutable par un utilisateur.

5. Dispositif de communication selon la revendication 1, dans lequel le module de livraison d'informations (204) comprend en outre un dispositif de stockage d'énergie (232).

6. Dispositif de communication selon la revendication 1, dans lequel le module d'entrée d'informations (202) inclut un clavier et/ou une caméra vidéo (246, 248).

7. Dispositif de communication selon la revendication 6, dans lequel le module d'entrée d'informations (202) inclut un clavier et le module de livraison d'informations (204) fournit un accès par signaux de communication au clavier pour permettre l'exécution de multiples fonctions de dispositif de communication.

8. Dispositif de communication selon la revendication 7, dans lequel les fonctions de dispositif de communication incluent une ou plusieurs des fonctions de téléphone mobile, d'assistant numérique personnel, d'appareil à image, d'horloge, de lecteur audio et de dispositif de jeu.

9. Dispositif de communication selon la revendication 1, dans lequel les tiges (240) sont constituées d'un matériau électriquement conducteur et les rainures (238) maintiennent des conducteurs électriques.

10. Dispositif de communication selon la revendication 9, dans lequel les tiges (240) et les conducteurs électriques coopèrent pour :
a) délivrer du courant électrique au module de livraison d'informations (204), ou
b) fonctionner comme une liaison de communication entre les modules de livraison (204) et d'entrée (202) d'informations.

11. Dispositif de communication selon la revendication 1, comprenant en outre un dispositif d'indication de distance (260, 262) qui produit une indication en réponse à une distance entre le module d'entrée d'informations (202) et le module de livraison d'informations (204) dépassant une distance de seuil.

12. Module portatif de livraison d'informations (204) qui peut être apparié avec un module d'entrée d'informations (202) pour former un dispositif de communication multifonction modulaire unitaire (200), le module d'entrée d'informations (202) ayant des surfaces opposées importantes dont au moins une inclut une ouverture (209) définie par une frontière intérieure formée par des parois latérales (237, 242), et le module d'entrée d'informations (202) inclut des tiges (240) ayant des formes et s'étendant longitudinalement le long de parois opposées parmi les parois latérales (237, 242), comprenant :
un corps contenant des circuits électroniques pour fournir des signaux en vue d'une livraison d'informations à un utilisateur au moins en partie sans stimulus d'utilisateur, le corps ayant des marges latérales (226) et des surfaces opposées importantes généralement planes (212, 222) ayant des frontières extérieures qui définissent un périmètre, le périmètre étant dimensionné et configuré pour un placement dans l'ouverture (209) du module d'entrée d'informations (202) ;
un écran d'affichage (216) supporté par l'une des surfaces opposées importantes (212) du module de livraison d'informations (204) et communiquant avec les circuits électroniques pour présenter au moins certaines des informations à l'utilisateur ; et
des rainures (238) s'étendant longitudinalement le long de marges opposées parmi les marges latérales (226) et étant de formes complémentaires aux formes des tiges (240) pour recevoir des tiges correspondantes parmi les tiges (240) et assurer un emboîtement par encliquetage libérable positif pour le module de livraison d'informations (204) lorsqu'il est placé dans l'ouverture du module d'entrée d'informations (202).

13. Module de livraison d'informations (204) selon la revendication 12, dans lequel l'écran d'affichage est de type écran tactile.

14. Module de livraison d'informations (204) selon la revendication 12, dans lequel les circuits électroniques incluent des circuits permettant un fonctionnement de téléphone mobile.

15. Module de livraison d'informations selon la revendication 12, comprenant en outre un couvercle d'agrément (330) configuré pour recouvrir au moins une partie du corps pour lui donner un aspect personnalisé.

16. Module de livraison d'informations selon la revendication 12, dans lequel le corps peut être apparié avec chacun des multiples modules d'entrée d'informations configurés dans différents emplacements avec des dispositifs à signal de communication qui contribuent à établir des liaisons de communication infrarouges, le module de livraison d'informations (204) comprenant en outre :
un premier dispositif de communication de signaux (234) qui contribue à établir une première liaison de communication infrarouge ; et
un second dispositif de communication de signaux (236) qui contribue à établir une seconde liaison de communication infrarouge, redondante, les premier et second dispositifs de communication de signaux étant positionnés sur le corps à différents emplacements (226, 237) pour établir une liaison de communication infrarouge compatible entre chacun des multiples modules d'entrée d'informations configurés avec des dispositifs à signal de communication dans différents emplacements connus lorsque les modules de livraison (204) et d'entrée (202) d'informations sont appariés.
